# EUROPÄISCHE PATENTSCHRIFT

(11) **EP 0 981 258 B1**
(45) Veröffentlichungstag und Bekanntmachung des Hinweises auf die Patenterteilung: **11.04.2007**
(21) Anmeldenummer: 99113960.1
(22) Anmeldetag: 17.07.1999
(51) Int. Cl.: H04Q 11/04, H04J 3/06

(54) **Verfahren zur digitalen Übertragung von Informationen und/oder Daten auf einer Übertragungsstrecke**
Method for the digital transport of information and/or data over a transmission link
Procédure pour le transport numérique de l' information et/ou des données sur une voie de transmission

(30) Priorität: 18.08.1998 DE 19837358
(43) Veröffentlichungstag der Anmeldung: 23.02.2000
(73) Patentinhaber: Ericsson AB, Stockholm (SE)
(72) Erfinder: Kaffenberger, Ruediger, 71573 Allmersbach (DE); Schueller, Reiner, 71397 Leutenbach (DE)
(74) Vertreter: Manitz, Finsterwald & Partner GbR

(56) Entgegenhaltungen:
- EP-A- 0 766 421
- EP-A- 0 797 374
- US-A- 5 414 704
- US-A- 5 570 371
- YASUDA Y ET AL: "Automated network connection tracing and data gathering methods using overhead bytes in the SDH frame structure" COMMUNICATIONS - RISING TO THE HEIGHTS. DENVER, JUNE 23 - 26, 1991, PROCEEDINGS OF THE INTERNATIONAL CONFERENCE ON COMMUNICATIONS, NEW YORK, IEEE, US, Bd. VOL. 1, 23. Juni 1991 (1991-06-23), Seiten 33-38, XP010044248 ISBN: 0-7803-0006-8
- RASKOVIC D ET AL: "An implementation of hash based ATM router chip" SYSTEM SCIENCES. VOL. II., PROCEEDINGS OF THE TWENTY-EIGHTH HAWAII INTERNATIONAL CONFERENCE ON WAILEA, HI, USA 3-6 JAN. 1995, LOS ALAMITOS, CA, USA,IEEE COMPUT. SOC, 3. Januar 1995 (1995-01-03), Seiten 32-40, XP010128218 ISBN: 0-8186-6930-6

## Beschreibung

Die Erfindung betrifft ein Verfahren zur digitalen Übertragung von Informationen und/oder Daten (Signale) auf einer Übertragungsstrecke mit den im Oberbegriff des Anspruchs 1 genannten Merkmalen.

### Stand der Technik

Es ist bekannt, Signale in einem synchronen digitalen Transfermodus (SDH - synchronous digital hierarchy) über eine Übertragungsstrecke zu übertragen. Hierbei werden die Signale in sogenannten Containern zwischen zwei Punkten der Übertragungsstrecke übertragen. Diese Container können jeweils eine Vielzahl von Teilsignalen enthalten. Um einen Datenschutz während der Übertragung der Signale einhalten zu können, ist bekannt, jedem zu übertragenden Teilsignal ein Identifikationssignal (TTI, Trail-Trace-Identifier) zuzuordnen. Diese Identifikationsssignale dienen der Zuordnung von zu übertragenden Signalen zu bestimmten Empfängern der zu übertragenden Signale. Um diese Identifizierung zu ermöglichen, werden die Identifikationssignale zeitlich vor der Übertragung der eigentlichen Signale wenigstens einem Netzelement der Übertragungsstrecke übermittelt. Dieses empfängt die Identifikationssignale und legt diese in einem Speicher ab. Werden nun nachfolgend die ebenfalls mit den Identifikationssignalen verknüpften zu übertragenden Signale empfangen, wird zunächst ein Vergleich der zuvor übermittelten und abgespeicherten Identifikationssignale mit den aktuellen Identifikationssignalen durchgeführt. Ergibt dieser Vergleich eine Identität zwischen den Identifikationssignalen wird auf die Rechtmäßigkeit der empfangenen Signale erkannt. Besteht zwischen dem vorab übermittelten, also erwarteten Identifikationssignal und dem mit den zu übertragenden Signalen übertragenen Identifikationssignal eine Abweichung, wird erkannt, daß die übertragenden Signale auf einem falschen Übertragungsweg vermittelt wurden. Durch einen entsprechenden Algorithmus kann dann die Übertragung der Signale abgebrochen werden, so daß eine Vertraulichkeit der zu übertragenden Informationen und/oder Daten sichergestellt bleibt.

Die Identifikationssignale besitzen eine Größe von mehreren Byte, beispielsweise 16 Byte oder 64 Byte. Jedem Teilsignal eines zu übertragenden Containers können hierbei zwei Identifikationssignale zugeordnet sein, die einerseits einer gesamten Übertragungsstrecke und andererseits einem ausgewählten Abschnitt der Übertragungsstrecke zugeordnet sein können. Entsprechend der Anzahl der Teilsignale eines Containers, wobei üblicherweise 63 Teilsignale übertragen werden, denen wiederum jeweils zwei Identifikationssignale zugeordnet sein können, ergibt sich ein äußerst komplexes und aufwendiges Vergleichsverfahren. Hierbei ist zum einen ein entsprechend großer Speicherplatz vorzuhalten, der die erwarteten Identifikationssignale abspeichert. Zum anderen erfolgt eine Übertragung der Signale bei der digitalen Datenübertragung in einem sehr schnellen Ablauf, so daß die übertragenen Identifikationssignale mit den erwarteten Identifikationssignalen in entsprechend kurzer Zeit komplett zu vergleichen sind. Sowohl der benötigte Speicherplatz als auch die benötigte schnelle Bearbeitung erfordern eine relativ aufwendige und somit kostenintensive Schaltungsanordnung.

Aus der EP-A-O 766 421 ist ein Verfahren zur digitalen Übertragung von Informationen oder Daten auf einer Übertragungsstrecke zur sicheren und stabilen Erkennung eines zu einem Datenpaket gehörenden Path-Trace oder Section-Trace, das innerhalb einer vorgegebenen Rahmenstruktur der synchronen digitalen Hierarchie in einem Kommunikationsnetz übertragen wird, beschrieben. Bei diesem Verfahren werden auch mögliche Übergangszustände vor und nach Signalunterbrechungen erkannt, so dass die Auslösung eines Fehlalarms und die damit verbundenen Fehlersignalisierungen vermieden werden.

### Vorteile der Erfindung

Das erfindungsgemäße Verfahren mit den im Anspruch 1 genannten Merkmalen bietet demgegenüber den Vorteil, daß der Aufwand zum Vergleich der erwarteten Identifikationssignale mit den übermittelten Identifikationssignalen mit einem geringeren Aufwand durchführbar ist. Dadurch, daß die Identifikationssignale repräsentierende Zahlenwerte der erwarteten Identifikationssignale mit Zahlenwerten der übertragenden Identifikationssignale verglichen werden, läßt sich vorteilhaft eine Vereinfachung des Vergleiches erzielen, da nunmehr in dem den Vergleich durchführenden Bauelement der Übertragungsstrecke nicht mehr die gesamten Zeichenfolgen der Identifikationssignale gespeichert und verglichen werden müssen, sondern nur noch lediglich deren Zahlenwerte. Hierzu wird ein deutlich verringerter Speicherplatz benötigt und eine Zeit zur Durchführung des Vergleiches reduziert.

In bevorzugter Ausgestaltung der Erfindung ist vorgesehen, daß die Zahlenwerte der Identifikationssignale durch ein nach mathematischen Regeln definiertes Codierungsverfahren ermittelt werden. Entsprechend der angewendeten mathematischen Regeln, die beispielsweise von sogenannten Hash-Funktionen gebildet sein können, lassen sich die Identifikationssignale mit für den Vergleich hinreichender Genauigkeit bezeichnen beziehungsweise identifizieren.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Darstellung einer Übertragungsstrecke und
- Figur 2: eine schematische Darstellung eines Vergleiches von Identifikationssignalen.

### Beschreibung des Ausführungsbeispiels

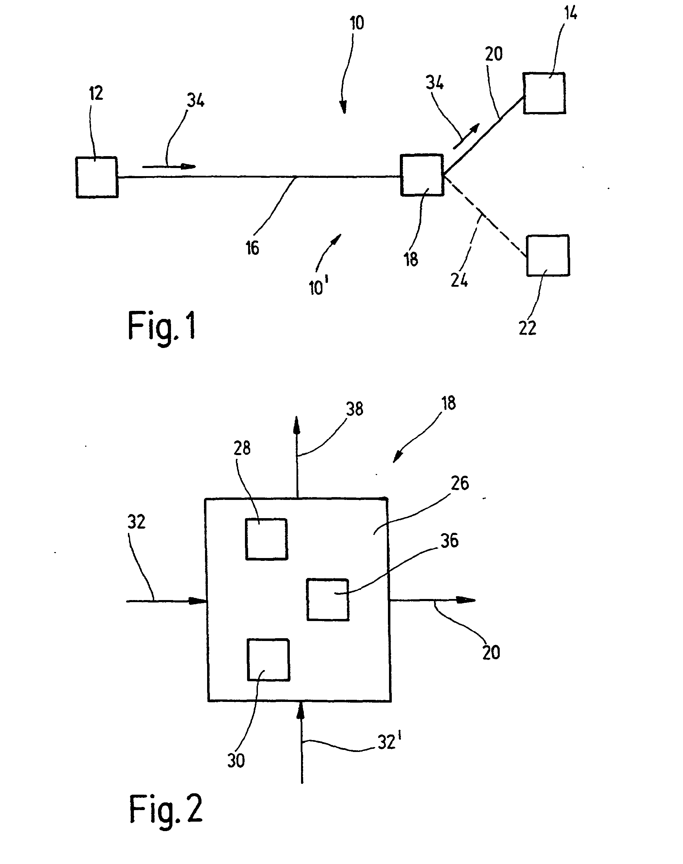

Figur 1 zeigt eine schematische Ansicht einer Übertragungsstrecke 10. Die Übertragungsstrecke 10 ist als Standleitung zwischen einem Teilnehmer 12 und einem Teilnehmer 14 geschaltet. Die Übertragungsstrecke 10 besteht hierbei aus einem Abschnitt 16 zwischen dem Teilnehmer 12 und einem Verzweigungspunkt 18 und einem Abschnitt 20 zwischen dem Verzweigungspunkt 18 und dem Teilnehmer 14. Ferner ist ein Teilnehmer 22 angedeutet, der ebenfalls mit dem Verzweigungspunkt 18 verbindbar ist, der jedoch - wie die gestrichelte Darstellung eines Abschnittes 24 verdeutlicht - nicht in die bestehende Übertragungsstrecke vom Teilnehmer 12 und vom Teilnehmer 14 eingebunden ist. Die aus den Abschnitten 16 und 20 bestehende Übertragungsstrecke 10 ist beispielsweise als Standleitung für eine bestimmte Zeitspanne zwischen den Teilnehmern 12 und 14 geschaltet. Die Zeitspanne kann beispielsweise mehrere Stunden, Tage, Wochen oder Monate betragen.

Vom Teilnehmer 12 zum Teilnehmer 14 oder vom Teilnehmer 14 zum Teilnehmer 12 oder bidirektional sollen über die Übertragungsstrecke 10 Informationen und/oder Daten (nachfolgend Signale genannt) übertragen werden. Diese werden in einem sogenannten synchronen digitalen Transfermodus (SDH - synchronous digital hierarchy) übertragen. Hierbei werden die Signale in einzelnen Containern zwischen den Teilnehmern 12 und 14 übertragen. Ein derartiges digitales Übertragungsverfahren ist bekannt, so daß im Rahmen der vorliegenden Beschreibung hierauf nicht näher eingegangen werden soll.

Um eine Vertraulichkeit der zu übertragenden Signale sicherzustellen, wird der Übertragungsstrecke 10, bestehend aus den Abschnitten 16 und 20, wenigstens ein Identifikationssignale zugeordnet. Dieses Identifikationssignale besteht aus einer zusammenhängenden Folge von Binärziffern (Bytes) und ist durch ein Management-System der Übertragungsstrecke 10 festlegbar. Im weiteren wird davon ausgegangen, daß Signale vom Teilnehmer 12 zum Teilnehmer 14 übertragen werden sollen. Das Management-System übermittelt dem Verzweigungspunkt 18 und einem Endgerät des Teilnehmers 14 die Identifikationssignale. Hierbei kann dem Abschnitt 16 des Übertragungsstrecke 10 zwischen dem Teilnehmer 12 und dem Verzweigungspunkt 18 ein anderes Identifikationssignal zugeordnet sein als dem Abschnitt 20 zwischen dem Verzweigungspunkt 18 und dem Teilnehmer 14. Hierdurch kann beispielsweise erreicht werden, daß der Abschnitt 16 gleichzeitig für eine weitere Standleitung genutzt werden kann, die beispielsweise zu dem Teilnehmer 22 führt, wobei für diese Übertragungsstrecke 10' dann die Abschnitte 16 und 24 in analoger Weise Identifikationssignale zugeordnet bekommen können.

Dieses zugeordnete Identifikationssignal wird unabhängig von der Übertragung der Signale, bei der Einrichtung der Verbindung (Schaltung der Standleitung) über die Abschnitte 16 und 20, dem Verzweigungspunkt 18 und/oder dem Teilnehmer 14 mitgeteilt. Diese besitzen jeweils einen Hardware-Baustein mit entsprechender Steuerung, der in Figur 2 schematisch dargestellt und mit 26 bezeichnet ist. Das Bauelement 26 besitzt einen Speicher 28 sowie eine als integrierte Schaltung ausgebildete Schaltungsanordnung 30. Das beziehungsweise die Bauelemente 26 sind Bestandteile des Management-Systemes der Übertragungsstrecke 10. Das Bauelement 26 erhält das erwartete Identifikationssignal 32. Dieses wird mittels der Schaltungsanordnung 30 verarbeitet und in dem Speicher 26 abgelegt. Hierbei wird das vom Management-System vor der eigentlichen Signalübertragung übermittelte Identifikationssignal mittels programmmäßig in der Schaltungsanordnung 30 abgelegter mathematischer Regeln, beispielsweise sogenannter Hash-Funktionen, in Zahlenwerte (Hash-Werte) gewandelt und als Zahlenwert im Speicher 28 abgelegt. Der Speicherumfang des gesamten Identifikationssignales, der beispielsweise aus 16 Byte besteht, reduziert sich somit auf den ermittelten Zahlenwert. Da bekanntermaßen die Abbildung der Identifikationssignale auf einen Zahlenwert nicht eindeutig sein kann, das heißt, mehrere verschiedene Identifikationssignale können den gleichen Zahlenwert besitzen, wird die Stellenzahl des zu ermittelnden und zu speichernden Zahlenwertes so gewählt, daß die Wahrscheinlichkeit, daß unterschiedliche Identifikationssignale durch Abarbeitung der mathematischen Regeln den gleichen Zahlenwert (Hash-Wert) zugeordnet bekommen, praktisch ausgeschlossen werden kann.

Die zur Bestimmung der Zahlenwerte der Identifikationssignale verwendete mathematische Regel (Hash-Funktion) kann so ausgelegt sein, daß bestimmte Eigenschaften der Identifikationssignale, beispielsweise festgelegte Wertebereiche oder eine festgelegte Codierung der Identifikationssignale, bei der Abbildung auf einen Hash-Wert berücksichtigt wird.

Nach Festlegung der Identifikationssignale für die Übertragungsstrecke 10 und deren Wandlung in einen Zahlenwert und Ablage in dem Speicher 28 der Bauelemente 26 werden bei jeder nachfolgenden Übertragung von Signalen 34 über die Übertragungsstrecke 10 mit diesen gemeinsam in ansich bekannter Weise die festgelegten Identifikationssignale mit übertragen. Diese übertragenen Identifikationssignale 32' werden von der integrierten Schaltung des Bauelementes 26 mit den festgelegten mathematischen Regeln bearbeitet und ebenfalls in einen Zahlenwert (Hash-Wert) gewandelt. Ein Vergleicher 36 vergleicht nunmehr den im Speicher 28 abgelegten Zahlenwert des erwarteten Identifikationssignales 32 mit dem ermittelten Zahlenwert des empfangenen Identifikationssignales 32'. Besteht eine Identität zwischen den Zahlenwerten, kann auf eine Zugehörigkeit der Signale 34 zu der geschalteten Übertragungsstrecke 10 erkannt werden. Hierdurch kann beispielsweise der Verzweigungspunkt 18 die Signale 34 auf den Abschnitt 20 der Übertragungsstrecke 10 freigeben. Ermittelt der Vergleicher 36 eine Abweichung zwischen den ermittelten Zahlenwerten des erwarteten Identifikationssignales 32 und des empfangenen Identifikationssignales 32' kann ein Steuersignal 38 an das Management-System der Übertragungsstrecke 10 gegeben werden, das daraufhin die Übertragung abbricht. Hierdurch wird verhindert, daß Signale 34 den Empfänger 14 erreichen, die nicht für den Empfänger 14 bestimmt sind. Die Vertraulichkeit der Signalübertragung wird somit gewährleistet.

Zusätzlich kann vorgesehen sein, daß, wenn der Vergleicher 36 eine Abweichung zwischen den Zahlenwerten des erwarteten Identifikationssignales 32 und des erhaltenen Identifikationssignales 32' feststellt, das Management-System infolge des Steuersignales 38 das Identifikationssignal 32 nochmals dem Bauelement 26 übermittelt, und dieses das Identifikationssignal 32 komplett, das heißt ohne Wandlung in einen Zahlenwert durch die festgelegte mathematische Regel ablegt. Das dann erhaltene nächste mit den Signalen übertragende Identifikationssignal 32' wird ebenfalls komplett, das heißt ohne Wandlung in einen Zahlenwert mit der nur im Abweichungsfalle abgelegten Zeichenfolge des Identifikationssignales 32 verglichen. Besteht die Abweichung weiterhin zwischen dem erwarteten Identifikationssignal 32 und dem erhaltenen Identifikationssignal 32', erfolgt eine endgültige Unterbrechung der Übertragungsstrecke 10 durch das Management-System.

## Patentansprüche

1. Verfahren zur digitalen Übertragung von Informationen und/oder Signalen auf einer Übertragungsstrecke, wobei die Signale in einem synchronen digitalen Transfermodus übertragen werden und jeweils durch wenigstens ein Identifikationssignal gekennzeichnet werden, die als Zeichenfolge übertragen werden, wobei die Identifikationssignale in wenigstens einem Bauelement der Übertragungsstrecke mit einem erwarteten Identifikationssignal verglichen werden, **dadurch gekennzeichnet, dass** das erwartete Identifikationssignal (32) in einen Zahlenwert gewandelt wird, dieser Zahlenwert in dem Bauelement (26) gespeichert wird, und die mit den Signalen (34) empfangenen Identifikationssignale (32') ebenfalls in einen Zahlenwert gewandelt werden, und die Zahlenwerte der erwarteten und empfangenen Identifikationssignale (32, 32') verglichen werden.

2. Verfahren nach Anspruch 1, **dadurch gekennzeichnet, dass** die Zahlenwerte der Identifikationssignale (32, 32') durch ein nach mathematischen Regeln definiertes Codierungsverfahren ermittelt werden.

3. Verfahren nach einem der vorhergehenden Ansprüche, **dadurch gekennzeichnet, dass** die Zahlenwerte mittels Hash-Funktionen ermittelt werden.

4. Verfahren nach einem der vorhergehenden Ansprüche, **dadurch gekennzeichnet, dass** eine Stellenzahl der Zahlenwerte so gewählt wird, dass unterschiedliche Identifikationssignale (32, 32') durch Abarbeitung der mathematischen Regeln nicht einen gleichen Zahlenwert erhalten können.

5. Verfahren nach einem der vorhergehenden Ansprüche, **dadurch gekennzeichnet, dass** bei der Wandlung der Identifikationssignale (32, 32') in Zahlenwerte, den Identifikationssignalen (32, 32') zugeordnete Eigenschaften, beispielsweise festgelegte Wertebereiche oder eine festgelegter Codierung der Identifikationssignale (32, 32'), berücksichtigt werden.

6. Verfahren nach einem der vorhergehenden Ansprüche, **dadurch gekennzeichnet, dass** wenn ein Vergleich zwischen den Zahlenwerten der Identifikationssignale (32, 32') eine Abweichung ergibt, das erwartete Identifikationssignal (32) erneut übertragen wird und mit dem nächsten gemeinsam mit den Signalen (34) übertragenen Identifikationssignal (32') verglichen wird.

7. Verfahren nach Anspruch 6, **dadurch gekennzeichnet, dass** nach erkannter Abweichung die Identifikationssignale (32, 32') ohne Wandlung in einen Zahlenwert, sondern als Zeichenfolge verglichen werden.

## Claims

1. A method for the digital transmission of information and/or signals on a transmission path, wherein the signals are transmitted in a synchronous digital transfer mode and are each marked by at least one identification signal transmitted as a character sequence, with the identification signals being compared in at least one component of the transmission path with an expected identification signal, **characterised in that** the expected identification signal (32) is converted into a numerical value, this numerical value is stored in the component (26) and the identification signals (32') received with the signals (34) are likewise converted into a numerical value and the numerical values of the expected and of the received identification signals (32, 32') are compared.

2. A method in accordance with claim 1, **characterised in that** the numerical values of the identification signals (32, 32') are determined by an encoding process defined according to mathematical rules.

3. A method in accordance with any one of the preceding claims, **characterised in that** the numerical values are determined by means of hash functions.

4. A method in accordance with any one of the preceding claims, **characterised in that** a number of digits of the numerical values is selected such that different identification signals (32, 32') can not receive the same numerical value by working through the mathematical rules.

5. A method in accordance with any one of the preceding claims, **characterised in that**, on the conversion of the identification signals (32, 32') into numerical values, properties associated with the identification signals (32, 32'), for example fixed value ranges or a fixed encoding of the identification signals (32, 32') are taken into account.

6. A method in accordance with any one of the preceding claims, **characterised in that**, if a comparison between the numerical values of the identification signals (32, 32') produces a deviation, the expected identification signal (32) is transmitted again and is compared with the next identification signal (32') transmitted together with the signals (34).

7. A method in accordance with claim 6, **characterised in that**, after a recognized difference, the identification signals (32, 32') are compared without conversion into a numerical value, but as a character sequence.

## Revendications

1. Procédé pour la transmission numérique d'informations et/ou de signaux sur un trajet de transmission, les signaux étant transmis en mode transfert numérique synchrone et étant caractérisés chacun par au moins un signal d'identification qui sont transmis comme succession de caractères, les signaux d'identification étant comparés, dans au moins un composant du trajet de transmission, à un signal d'identification attendu, **caractérisé en ce que** le signal d'identification attendu (32) est converti en une valeur numérique, cette valeur numérique est mémorisée dans le composant (26), et les signaux d'identification (32') reçus avec les signaux (34) sont également convertis en une valeur numérique, et les valeurs numériques du signal d'identification attendu et du signal d'identification reçu (32, 32') sont comparées.

2. Procédé selon la revendication 1, **caractérisé en ce que** les valeurs numériques des signaux d'identification (32, 32') sont déterminées par un processus de codage défini selon des règles mathématiques.

3. Procédé selon l'une des revendications précédentes, **caractérisé en ce que** les valeurs numériques sont déterminées au moyen de fonctions de contrôle de somme (Hash).

4. Procédé selon l'une des revendications précédentes, **caractérisé en ce qu'**un nombre de chiffre des valeurs numériques est choisi de telle sorte que des signaux d'identification différents (32, 32') ne peuvent pas recevoir une même valeur numérique par mise en oeuvre des règles mathématiques.

5. Procédé selon l'une des revendications précédentes, **caractérisé en ce que** lors de la conversion des signaux d'identification (32, 32') en valeurs numériques, on prend en compte des propriétés associées aux signaux d'identification (32, 32'), par exemple des plages de valeurs fixées ou un codage fixé des signaux d'identification (32, 32').

6. Procédé selon l'une des revendications précédentes, **caractérisé en ce que** lorsqu'une comparaison entre les valeurs numériques des signaux d'identification (32, 32') révèle un écart, le signal d'identification attendu (32) est retransmis et comparé au prochain signal d'identification (32') transmis conjointement avec les signaux (34).

7. Procédé selon la revendication 6, **caractérisé en ce qu'**une fois l'écart reconnu, les signaux d'identification (32, 32') sont comparés sans conversion en une valeur numérique, mais en tant que succession de caractères.
